# EUROPEAN PATENT SPECIFICATION

(11) **EP 1 106 102 B1**
(45) Date of publication and mention of the grant of the patent: **02.11.2006**
(21) Application number: 01200484.2
(22) Date of filing: 19.04.1996
(51) Int. Cl.: A46B 1/00, A46B 13/00, A46D 1/00, B24D 13/10, B24D 13/14

(54) **Abrasive brush and filaments**
Mit Schleifmittel versehene Bürste oder Bürstenborsten
Brosse et filaments abrasifs

(30) Priority: 28.04.1995 US 431910; 16.11.1995 US 558718; 16.11.1995 US 559334
(43) Date of publication of application: 13.06.2001
(62) Divisional of application: 96913063.2
(73) Proprietor: MINNESOTA MINING AND MANUFACTURING COMPANY, St. Paul, Minnesota 55133-3427 (US)
(72) Inventor: Johnson, David E., Saint Paul, Minnesota 55133-3427 (US); Mann, Lawrence J., Saint Paul, Minnesota 55133-3427 (US); Mevissen, Scott M., Saint Paul, Minnesota 55133-3427 (US); Pihl, Richard M., Saint Paul, Minnesota 55133-3427 (US); Roeker, David C., Saint Paul, Minnesota 55133-3427 (US); Bange, Donna W., Saint Paul, Minnesota 55133-3427 (US); Liepa, Mara E., Saint Paul, Minnesota 55133-3427 (US); Ionta, Richard, Saint Paul, Minnesota 55133-3427 (US)
(74) Representative: Hill, Cecilia Ann

(56) References cited:
- WO-A-93/18891
- GB-A- 743 022
- US-A- 3 233 272
- US-A- 3 618 154
- US-A- 5 174 795
- US-A- 5 233 719

## Description

The present invention relates generally to an abrasive brush having a plurality of bristles unitary with a base, and more particularly to an abrasive brush made by injection molding a mixture of a moldable polymer and abrasive particles. The brush can include organic or inorganic abrasive particles.

### BACKGROUND OF THE INVENTION

Brushes have been used for many years to polish, clean and abrade a wide variety of substrates. These brush products typically have a plurality of bristles that contact the substrate. Abrasive parties can be added to bristles to increase their abrasivaness. There are many manufacturing steps necessary to manufacture a conventional abrasive brush having bristles which contain abrasive particles. A mixture of abrasive particles and a thermoplastic binder may be combined and then extruded to form a bristle. The bristle is then cut to the desired length. A plurality of these bristles are then mechanically combined to form a brush segment. Next, a plurality of these brush segments may be installed on a hub or plate to form a brush.

One example of such a brush is disclosed in U.S. Patent No 5,045,091. "Method of Making Rotary Brush With Removable Brush Elements, (Abrahamson et al.). In Abrahamson et al., a plurality of abrasive bristles are mechanically damped together and a root system is installed to form a brush segment. A plurality of these brush segments are installed on a rotary hub. Another arrangement for mechanically mounting bristles on a hub to form a brush segment is disclosed in U.S. Patent No. 5,233,719. "Apparatus and Brush Segment Arrangement for Finishing Wheel Brushes," (Young et al.). Young et al. teach a brush segment comprising a substrate with a carpet of bristles mounted on one side of the substrate, by means of a polymeric resin for example, and a root system extending from the opposite side of the substrate for engagement with a rotary hub. U.S. Patent No. 5,400,458 (Rambosek) teaches a brush segment having a plurality of bristles embedded in a polymeric base portion. A root means for attaching the segment to a hub can be integrally molded with the base.

U.S. Patent No. 5,233,794, "Rotary Tool Made of Inorganic Fiber-Reinforced Plastic," (Kikutani et al.), discloses a rotary tool 5 having a rotating tip formed integrally with a shaft 3. The rotary tool is formed of a thermosetting resin containing inorganic long fibers with a high degree of hardness as an abrasive means in an amount from 50% to 81% by volume. The long inorganic fibers can have a diameter in the range of 3 µm to 30 µm. In one of the embodiments of Kikutani et al., the rotating tip is formed as a column or cylinder with elements 6 which correspond to the bristle of a brush extending from the tip, as is reproduced in Figure 31.

U.S. Patent Nos. 5.152,917 and 5,304,223 (Pieper et al.) teach coated abrasive articles comprising precisely shaped abrasive composites bonded to a backing. The abrasive composites comprise binder and abrasive particles. The precisely shaped composites can be in the form of, for example, pyramids, sawtooth grooves, or linear grooves. The maximum distance between corresponding points on adjacent composite shapes can be less than one millimeter. The coated abrasive of Pieper et al. can be made, for example, according to the following general procedure. First, a slurry containing abrasive grains and binder is introduced to a production tool. Second, a backing is introduced to the outer surface of the production tool such that the slurry wets the front side of the backing. Third, the binder is at least partially cured. Fourth, the production tool is removed from the backing.

U.S. Patent No. 5.3 16.812 (Stout et al.) teaches a thermoplastic backing for use in abrasive articles. A resinous binder adheres abrasive particles to the thermoplastic backing.

U.S. Patent Nos. 5,174,795 and 5,232,470 (Wiand) teach a planar abrasive article comprising a sheet portion with a plurality of protrusions extending therefrom. Abrasive particles are homogeneously dispersed throughout the moldable material comprising the article. Wiand teaches one embodiment having short protrusions extending 1.6 mm (.063 in) from the backing and having a 3.2 mm (0.125 in) diameter, and another embodiment having short protrusions extending 1.3 - 1.5 mm (0.05 - 0.06 in) from the backing and having a 1.3 mm (0.05 in) diameter.

G.B. Patent Application No. 2.043,501, (Dawkins) discloses an abrasive article for polishing ophthalmic workpieces. The abrasive article is made by injection molding a mixture of abrasive grains and a thermoplastic binder to form an abrasive article comprising a flexible backing having a plurality of upstanding projections, the ends of which act as operative abrading surfaces.

U.S. Patent No. 5,427,595 (Pihl et al.) discloses an extruded abrasive filament including a first elongate filament component having a continuous surface throughout its length and including a first hardened organic polymeric and a second elongate filament component coterminous with the first elongate filament component, including a second hardened organic polymeric material in melt fusion adherent contact with the first elongate filament component along the continuous surface The second hardened organic polymeric material can be the same or different than the first hardened organic polymeric material. At least one of the first and second hardened organic polymeric materials includes a thermoplastic elastomer having abrasive particles adhered therein. Also disclosed is an abrasive article comprised of at least one abrasive filament mounted to a substrate such as a hub adapted to be rotated at a high rate of revolution.

U.S. Patent No. 5.460,883 (Barber et al.) discloses a composite abrasive filament which includes at least one preformed core at least partially coated with a thermoplastic elastomer having abrasive particles dispersed and adhered therein, the thermoplastic elastomer and abrasive particles together comprising a hardened composition. The composite abrasive filament has a hardened composition over at least a portion, preferably over the entire surface of at least one preformed core. The preformed core is formed in a step separate from and prior to one or more coating steps, one of which coats the preformed core with abrasive-filled thermoplastic elastomer.

Polyamide, also known as "Nylon", filaments were developed in the late 1950's as a synthetic alternative to natural filaments. At about that time an extrusion process was developed for dispersing abrasive particles uniformly in a nylon matrix in the form of a filament (U.S. Pat. Nos. 3,522,342 and 3,947,169). A review of polyamide abrasive filaments is presented by Watts, J.H., "Abrasive Monofilaments-Critical Factors that Affect Brush Tool Performance", Society of Manufacturing Engineers Technical Paper, 1988, a written version of a presentation by the author at the WESTEC Conference, held March 21-24, 1988. It is known to use conventional inorganic abrasive particles with such polyamide filaments. As explained by Watts, as filaments of this type wear, new abrasive particles are exposed. An abrasive filament brush tool made using a plurality of these filaments is thus regenerated during use. While adequate for many purposes, various polyamides have property limitations which make their use less than optimal for certain applications of abrasive filaments. U.S. Patent No. 5,427,595, Pihl et al., addresses such limitations and describes the use: of thermoplastic elastomers in abrasive filaments to reduce or overcome such limitations. The filaments of Pihl et al, include a core component and a sheath component which are coextruded Either or both of the core and sheath includes abrasive particles adhered therein. Pihl et al. teaches the use of conventional inorganic abrasive particles, although the claims of Pihl et al. are not limited to any particular type of abrasive particle.

U.S. Patent No. 5,460,883, Barber. Jr., et al., also addresses the limitations of polyamides and describes the use of thermoplastic elastomers in abrasive filaments to reduce or overcome such limitations. The filaments of Barber et al. include a preformed core component and a sheath component coated onto the core to form a composite filament. The coated sheath includes abrasive particles adhered therein. Barber et al. teaches the use of conventional inorganic abrasive particles, although the claims of Barber et al. are not limited to any particular type of abrasive particle.

Brushes incorporating abrasive bristles or filaments have been used for many years to polish, clean and abrade a wide variety of substrates. These brush products typically have a plurality of bristles or filaments that contact the substrate. Abrasive particles can be added to bristles to increase their abrasiveness. The brushes may be made as follows. A mixture of abrasive particles and any suitable thermoplastic binder may be combined and then extruded to form a bristle or abrasive filament. The abrasive filament is then cut to the desired length. A plurality of these abrasive filaments are then mechanically combined to form a brush segment. Next, a plurality of these brush segments may be installed on a hub or plate to form a brush.

The abrasive particles typically employed in abrasive filaments and brushes described above have been limited to inorganic panicles which necessarily have a high hardness, e.g. greater than 7 and usually greater than 9 on the Mohs hardness scale. The abrasive particles are sufficiently temperature resistant so as not to be deleteriously affected by the bristle or filament manufacturing process. Such abrasive particles are used in abrasive filaments and brushes to refine the surface of a workpiece. In some instances, this refinement is to remove a portion of the workpiece. In other instances, this refinement is to remove unwanted material (e.g., debris, oil residue, oxide layer, paint, etc.) from the workpiece surface. In some applications, it is desired to remove this unwanted material without any removal or abrasion of the underlying workpiece. However the abrasive particles in the abrasive filaments can be so "aggressive" that the abrasive filaments remove the unwanted material along with the workpiece surface.

U.S. Patent Nos. 3,090,061 and 3,134,122 to Charvat disclose the use of plastic beads on hard wire bristles to maintain the desired spacing of the bristles when assembled into a brush. Charvat teaches that this is effective to properly space and control the bristles to prevent undue compacting of the brush face and to assure equal frequency of tip contacts per unit length of brush face. The preferred brush bristle taught by Charvat is a steel wire have a Knoop hardness of at least 600, and in some cases in excess of 700 and even in excess of 800. Charvat also teaches that the bristle material may comprise any suitable brush bristle, including nylon and glass filament bristles, and that the beads need not be apertured bodies on the bristles, but may be spaced globules and protuberances adhered to the bristles which are not necessarily concentric therewith. The plastic beads and bristles are coated with a thin plastic coating. Charvat does not teach or suggest that the plastic bead spacer or buffer can instead be used as an abrasive particle. In fact, Charvat teaches the use of bristle materials that are much harder and more abrasive than the plastic beads, and also suggests including conventional inorganic abrasive particles in the plastic beads. Charvat teaches that the plastic coating and beads will erode during operation and that the protruding bristle ends are adapted to operate on the work in the manner of a true brush.

It is seen that there is a need to provide an abrasive brush that is easily and inexpensively manufactured, and which provides suitable durability and abrading characteristics. It is also seen that there is a need to provide a filament having abrasive particles that can remove foreign material from a workpiece surface efficiently without damage to the workpiece surface, or provide a desired fine finish to the workpiece surface.

### SUMMARY OF THE INVENTION

The present invention provides an integrally molded abrasive brush as defined in the accompanying claim 1. In one preferred embodiment, the base is flexible, the term "interspersed" as used herein means that the abrasive particles are embedded within and located throughout the thermoplastic material that forms a bristle of a molded abrasive brush.

In an aspect of the present invention, the moldable polymeric material includes abrasive particles interspersed throughout the abrasive brush.

In yet another aspect of the present invention, the bristles have an aspect ratio of at least 5. In one preferred embodiment, the bristles have an aspect ratio of at least 7. In another preferred embodiment, the bristles have an aspect ratio of at least 10. In a further preferred embodiment, the the bristles have an aspect ratio of at least 20.

In one preferred embodiment, the bristles each comprise a root adjacent the base and a tip opposite the base, and the bristles are tapered so as to be wider at the root than at the tip. In another preferred embodiment, the bristles are tapered at a first portion adjacent the root and have a constant thickness at a second portion adjacent the tip, In another preferred embodiment, the bristles include a fillet radius at the transition from the root to the base.

In another aspect of the invention, the bristles are coplanar with the base. In one preferred embodiment, the bristles extend radially from the outer edge of the base. In another preferred embodiment, the bristles are evenly angularly spaced about the outer edge.

In another aspect of the invention, the molded abrasive brush includes an attachment means provided on the base for attaching the abrasive brush to a tool. In one preferred embodiment the attachment means comprises a threaded stud integrally molded with the base and located at the centre of said base.

In another preferred embodiment, the base further comprises an inner edge, and the attachment means comprises a root integrally molded with the molded brush, the root extending from the inner edge and including a neck portion adjacent the inner edge and a base portion remote from the inner edge, the base portion being wider than the neck portion.

In another preferred embodiment, the base further comprises an inner edge, and the attachment means comprises a keyway formed in the inner edge, the keyway configured to engage with a corresponding key formed in a drive means.

In another preferred embodiment, the base further includes an inner edge, and the inner edge and outer edge comprise concentric circles bounding the base. In one preferred embodiment, the inner edge is configured to accept a drive shaft therethrough, and the base further comprises a mounting hole therein for accepting a locking rod therethrough.

In another aspect of the invention, the base further comprises an inner edge opposite the outer edge, the inner edge and the outer edge each comprising arcuate circular segments comprising an angular size equal to one another and no greater than 180°, the base further comprising a first radial edge extending from a first end of the inner edge to a first end of the outer edge, and a second radial edge extending from a second end of the inner edge to a second end of the outer edge. In one preferred embodiment, the angular size equals 180°. In another preferred embodiment, the angular size equals 120°. In yet another preferred embodiment, the angular size equals 90°.

In one preferred embodiment, the thermoplastic elastomer comprises a polyester based thermoplastic elastomer.

In any of the above molded brushes, the thermoplastic elastomer can preferably further comprise a lubricant.

In one aspect of any of the above brushes, the abrasive particles comprise inorganic abrasive particles. In another aspect, the abrasive particles comprise organic abrasive particles.

In any of the above brushes, the base may preferably be circular. In another aspect, the base may preferably be polygonal.

Another aspect of the present invention presents, more specifically, an integrally molded brush segment comprising a generally planar base having inner and outer edges defining concentric circles; the inner edge defining a circular hole in the base; and a plurality of bristles extending radially from the outer edge of the base. The bristles are coplanar with the base, have an aspect ratio of at least 2, and are integrally molded with the base. The molded brush segment comprises a polymeric thermoplastic elastomer including abrasive particles interspersed throughout.

Another aspect of the present invention presents, more specifically, an integrally molded brush segment comprising a generally planar base having a circular outer edge; a plurality of bristles extending radially from the outer edge of the base, in which the bristles are coplanar with the base, have an aspect ratio of at least 2, and are integrally molded with the base; and an attachment means provided on the base for attaching the brush segment to a drive means, the attachment means comprises a threaded stud integrally molded with the base, and located at the center of the base. The molded brush segment comprises a polymeric thermoplastic elastomer including abrasive particles interspersed throughout.

Another aspect of the present invention presents, more specifically an integrally molded brush segment comprising: a generally planar base; the base includes inner and outer edges each comprising arcuate circular segments comprising an angular size equal to one another and no greater than 180°, a first radial edge extending from a first end of the inner edge to a first end of the outer edge, and a second radial edge extending from a second end of the inner edge to a second end of the outer edge; and a plurality of bristles extending radially from the outer edge of the base. The bristles are coplanar with the base, have an aspect ratio of at least 2, and are integrally molded with the base. The molded brush segment comprises a polymeric thermoplastic elastomer including abrasive particles interspersed throughout.

The present invention also presents a brush assembly. The assembly comprises: a) a plurality of molded brush segments described above; and b) rotary drive means for rotating the plurality of molded brush segments. Each of the molded brush segments are mounted to the drive means by the attachment means so that each of the generally planar bases are parallel to one another.

### BRIEF DESCRIPTION OF THE DRAWINGS

The present invention will be further explained with reference to the appended Figures, wherein like structure is referred to by like numerals throughout the several views, and wherein:
Figure 1 is a plan view ofa first embodiment ofa radial abrasive brush segment according to the present invention;
Figure 2 is a cross sectional view of the brush segment of Figure 1, taken along line I-I;
Figure 3 is an isometric view of a plurality of brush segments of Figure 1 being assembled onto a shaft to form a brush assembly;
Figure 4 is a view like Figure 3, with the individual brush segments adjoining one another;
Figure 5 is a cross sectional view of a second embodiment of a radial abrasive brush segment according to the present invention; ,
Figure 6 is a plan view of a third embodiment of a radial abrasive brush segment according to the present invention;
Figure 7 is an end view of a plurality of brush segments of Figure 6 assembled together on a shaft;
Figures 8a-8d are cross sectional views of various embodiments of the bristle of the brush segment of the present invention, taken along line VIII-VIII of Figure 1;
Figure 9 is a partial elevation view of the brush segment of Figure 1 in operation;
Figure 10 is a plan view of a fourth embodiment of a radial abrasive brush segment according to the present invention,
Figure 11 is a partial plan view of a brush segment mounted on a shaft illustrating an alternate embodiment of an attachment means;
Figure 12 is a plan view of a brush segment illustrating a further embodiment of an attachment means;
Figure 13 is a cross sectional view of the brush segment of Figure 12, taken along line XIII-XIII;
Figure 14 is a schematic illustration of a first apparatus and method for making an abrasive brush in accordance with the present invention;
Figure 15 is a schematic illustration of a second apparatus and method for making an abrasive brush in accordance with the present invention;
Figure 16 is an elevational view of the mold of Figure 15;
Figure 17 is a sectional view of a first embodiment of the mold portions of Figure 15, taken along line XVII-XVII of Figure 16;
Figure 18 is a view like Figure 17 of an alternate embodiment of the mold portions of Figure 17; and
Figure 19 is a sectional view taken along line XIX-XIX of Figure 1; illustrating an alternate embodiment of the brush segment made by the mold of Figure 18.

### DETAILED DESCRIPTION OF THE INVENTION

In one aspect, this invention pertains to a molded abrasive brush, a method of making a molded abrasive brush and a method of using a molded abrasive brush.

The materials, manufacturing process and brush configuration will depend upon the desired refining application. As used herein, the term "refine" includes at least one of the following: remove a portion of a workpiece surface; impart a surface finish to a workpiece; descale a surface; deburr a surface; clean a workpiece surface, including removing paint or other coatings, gasket material, corrosion, oil residue, or other foreign material or debris; or some combination of the foregoing. In some applications, it may be preferred to provide aggressive abrasive characteristics, in which case the brush segment may comprise abrasive particles, larger size abrasive particles, harder abrasive particles, a higher abrasive particle to binder ratio, or some combination of the above. In other applications, it may be preferred to provide a polish type finish to the surface being refined, or to clean a surface without removing surface material itself, in which case the brush segment may employ no abrasive particles, smaller abrasive particles, softer abrasive particles, lower abrasive particle to binder ratio, or some combination of the above. It is possible to employ abrasive particles 26 of varied composition and hardness to obtain the desired abrading characteristics.

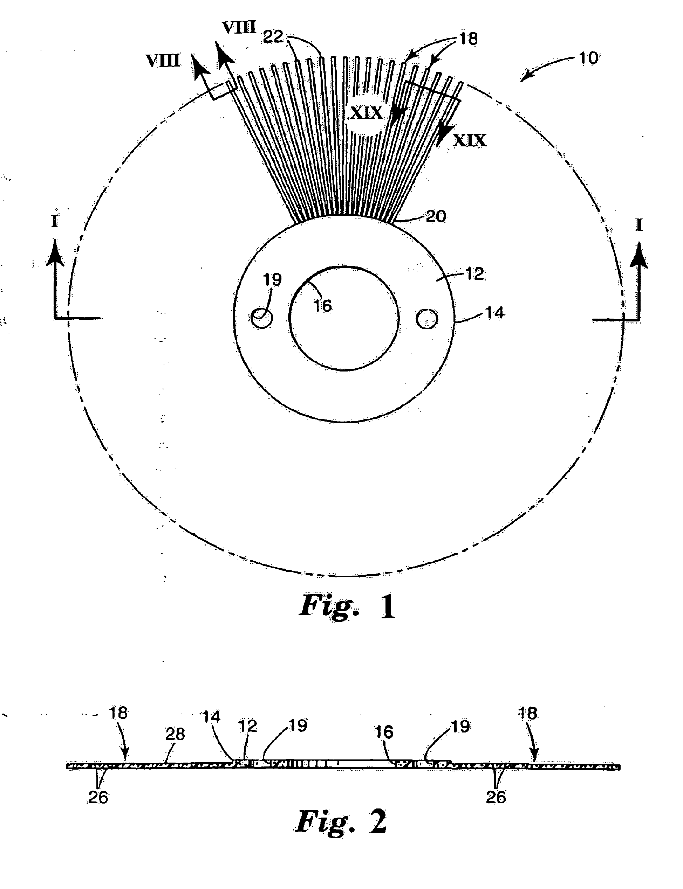

Referring to Figures 1 and 2, there is seen an embodiment of a molded abrasive brush according to the present invention. The terms "abrasive brush" and "abrasive brush segment" will be used interchangeably to refer to this embodiment. As illustrated in Figures 1 and 2, abrasive brush segment 10 comprises a base 12 having outer edge 14 and inner edge 16. A plurality of bristles 18 project outwardly from outer edge 14, beginning at bristle roots 20 and ending at bristle tips 22. There may be spaces between bristle roots 20 in which outer edge 14 of base 12 is exposed. Alternatively, adjacent bristles may adjoin one another at roots 20. Brush segment 10 is integrally molded such that bristles 18 and base 12 are continuous with one another. Brush segment 10 is preferably an abrasive brush segment which comprises a generally homogenous composition of abrasive particles 26 in a moldable polymer 28.

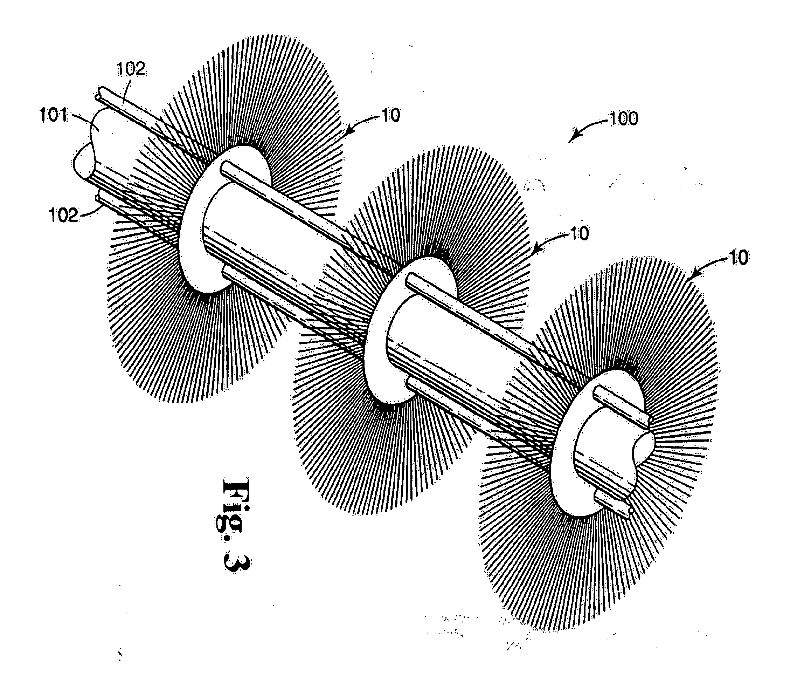

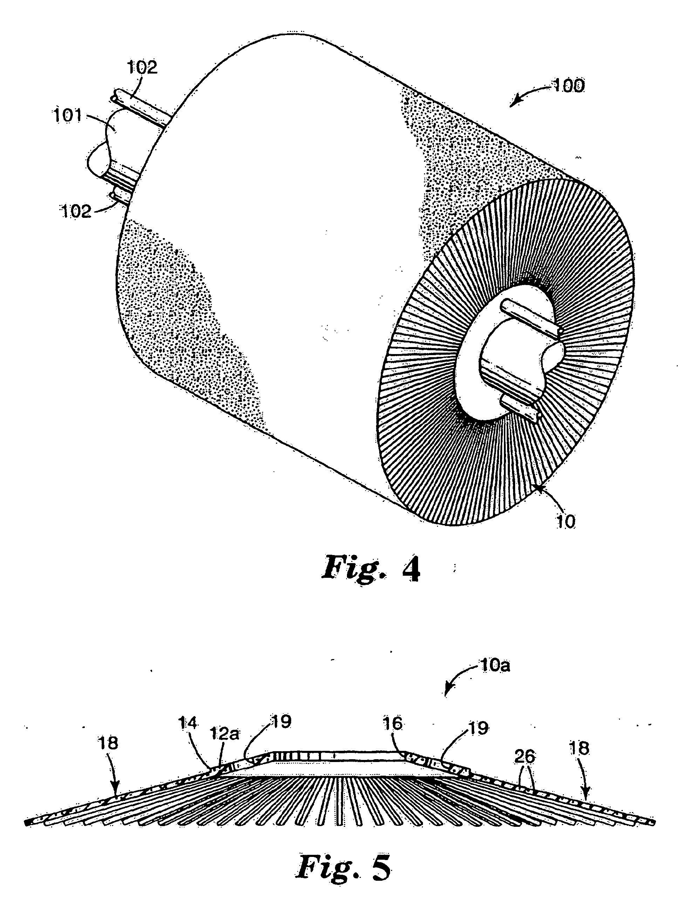

As illustrated in Figure 3, a plurality of brush segments 10 can be assembled onto main shaft 101 to form a brush assembly 100. Any number of segments 10 may be assembled together to provide an assembly 100 of any desired width. Preferably, the brush segments 10 are adjacent one another such that there is essentially no space between the brush segments, as illustrated in Figure 4. Alternatively, the brush segments 10 may be assembled onto to shaft 101 so as to have space between adjacent brush segments as illustrated in Figure 3. For example, there may be 5 to 10,000 brush segments to assembled together to form assembly 100, although more or less may be used as desired. A means for providing segment-to-segment engagement may be included to reduce or eliminate rotation of adjacent brush segments relative to one another Such engagement means can include, for example, an interengaging saw tooth pattern or hole and dimple pattern on the surfaces of base 12. For convenience, this embodiment may be referred to as a "brush segment" when it is intended to be combined with other segments into a brush assembly. However, it is understood that the term "brush segment" is not intended to exclude embodiments which are used themselves without being combined with other brush segments, and the term "brush" may also be used to refer to a brush segment.

### Base

In the embodiment illustrated in Figure 1, base 12 is a continuous circumferential portion which is generally planar. It is also within the scope of the invention to have a contoured or curved base. For example, base 12 may be convex, concave, or conical in shape. As illustrated in Figure 5, base 12a is conical, with the bristles 18 extending parallel to the conical surface defined by the base.

Brush segment 10 may optionally have an attachment means on base 12, such as a channel, keyway, or a root to mechanically join several brush segments together on a drive means to provide a brush assembly. As illustrated in Figure 1, base 12 includes two mounting holes 19, through which a locking rod may be inserted. A brush assembly 100, having two locking rods 102 inserted through holes 19 is illustrated in Figure 3. Shaft 101 and locking rods 102 may then be attached to a suitable rotary drive means.

In the embodiments illustrated in Figures 1-11, center portion 12 can preferably have, a thickness of from about 0. 5 ta 25 mm, more, preferably from about 1.0 to 10 mm, still more preferably from about 1.5 to 6 mm, and most preferably from about 1.5 to 3 mm. Base 12 is preferably circular as illustrated in Figure 1. The diameter of the outer edge 14 of base 12 is preferably from about 2.5 to 61.0 cm (1.0 to 24.0 in), although smaller and larger center portions are also within the scope of the invention. In one preferred embodiment, the base 12 is of a suitable material and thickness to provide a flexible base 12, which helps maintain more bristles in contact with an uneven or irregular workpiece. The base 12 preferably is capable of flexing at least 10°, more preferably at least 20°, and still more preferably at least 45° without damage or substantial permanent deformation to the base. Base shapes other than circular are also within the scope of the invention, including, but not limited to, oval, rectangular, square, triangular, diamond, and other polygonal shapes, as are relatively rigid or inflexible bases.

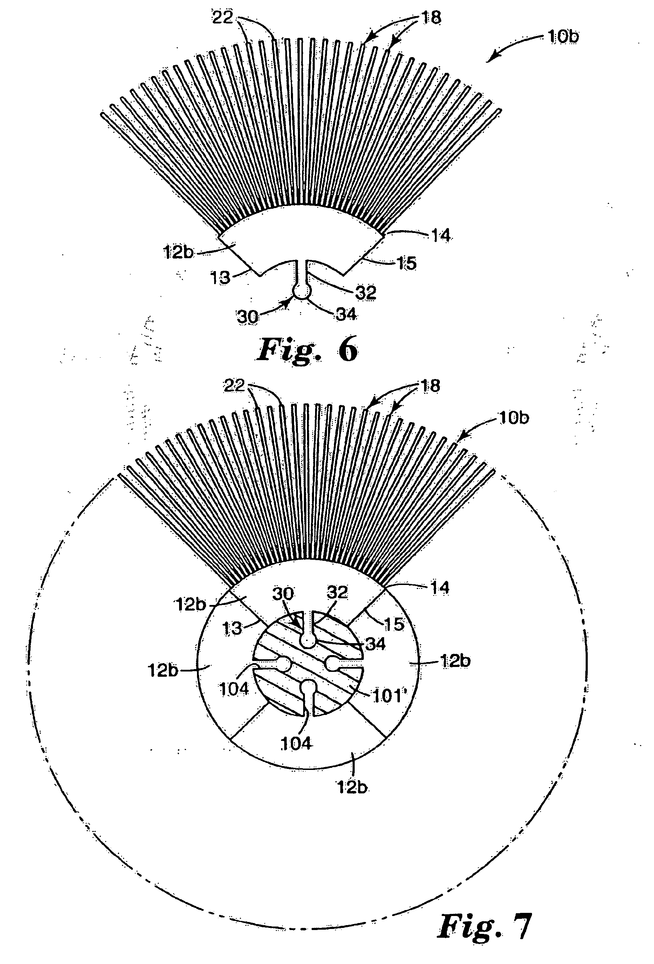

Base 12b may alternately be a ring sector as illustrated in Figure 6. In this embodiment, base 12b is bounded on each side by radial edges 13 and 15. Preferably, the ring sector is of an angular width that allows for an integer number of ring sectors to be assembled into a circumferential brush segment. For example, four 90° ring sectors 10b are readily arranged to make a 360° circumferential brush segment as illustrated in Figure 7.

Base 12 is molded integrally with the bristles 18 to provide a unitary brush segment. Thus, no adhesive or mechanical means is required to adhere bristles 18 to base 12. It is preferred that base 12 and bristles 18 are molded simultaneously. To make an abrasive brush segment, there may be a single mixture of abrasive particles 26 and moldable polymer 28 placed in the mold in a single injection process. In such an embodiment, the abrasive brush segment comprises a generally homogenous composition throughout. However, due to the molding process, the abrasive particle/binder mix may not be perfectly homogeneous. For example, as the polymer and abrasive mix is injected into the mold, the narrow bristle cavities may cause more polymer to initially cool adjacent the inside of the bristle cavity near the base, forcing a mix having a somewhat higher concentration of abrasive particles toward tip 22 of the bristle.

Alternatively, there may be two or more insertions of a moldable polymer 28 to the mold. For example, one insertion may contain a mixture of moldable polymer 28 and abrasive particles 26, located primarily in bristles 18. A second insertion may contain moldable polymer 28 without abrasive particles 26, or with fewer or a different type of abrasive particles, located primarily in base 12 of brush segment 10. It is also within the scope of this invention to have two insertions, both containing abrasive particles. The first insertion may have abrasive particles of a certain size, material, and/or hardness, while the second insertion may include different abrasive particles. During abrading, the abrasive particles nearer tip 22 are used first, and then the abrasive particles nearer root 20 are used.

### Bristles

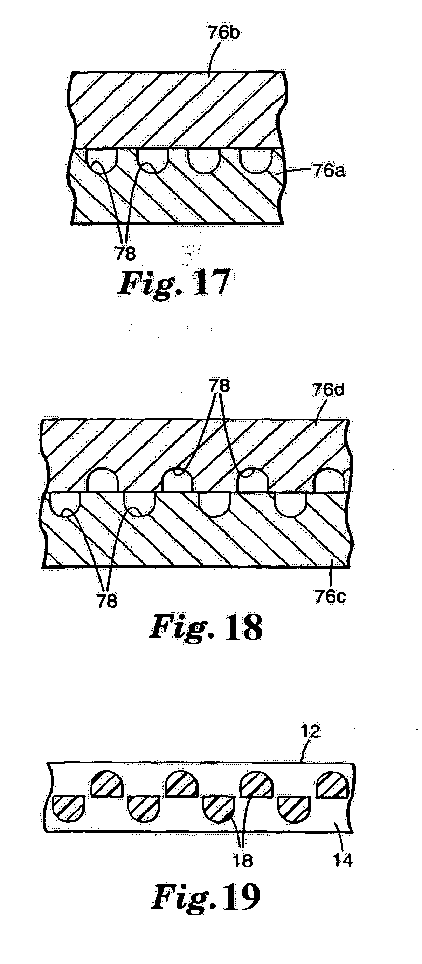

Bristles 18 extend from outer edge 14 of base 12, beginning at root 20 and ending at tips 22 remote from base 12. In one preferred embodiment, bristles 18 extend radially from the outer edge 14 of the base 12, and are coplanar with the base 12. For ease of molding (described more fully below), it is preferable that there is a single row of bristles 18 arranged around the outer edge 14. Alternatively, a double row of bristles may be formed, as illustrated in Figure 19. Bristles 18 preferably extend from outer edge 14 of base 12 in a plane parallel to the plane of base 12, whether base 12 is planar as illustrated in Figure 2, or conical as illustrated in Figure 5. Alternatively, bristles 18 may extend from outer edge 14 of base 12 at any oblique angle relative to the plane of the base.

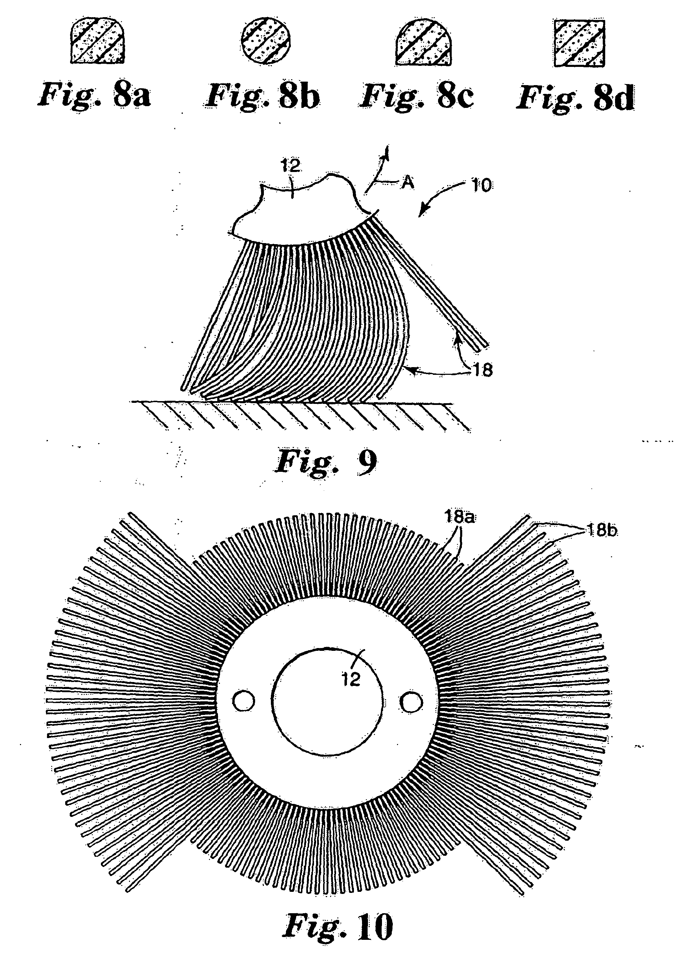

Bristles 18 may have any cross sectional area, including but not limited to, circular, star, half moon, quarter moon, oval, rectangular, square, triangular, diamond, or other polygonal shape. Some exemplary cross sections are illustrated in Figures 8a through 8d. In one preferred embodiment, bristles 18 comprise a constant cross section along the length of bristle 18. In other embodiments, bristles 18 will have a non-constant or variable cross section along the length of the bristle.

Bristles 18 may be tapered such that the cross sectional area of the bristle decreases in the direction away from root 20 towards tip 22. Tapered bristles 18 can have any cross section as described above. Bristles 1 8 are subjected to bending stresses as brush segment 10 is rotated against a workpiece as illustrated in Figure 9. These bending stresses are highest at the root 20 of bristles 18 (at outer edge 14). Therefore, a tapered bristle is more able to resist bending stresses than a bristle of constant cross sectional area. Bristles 18 can have a taper along the entire length, or can have a tapered portion adjacent the root 20 and a constant cross sectional area for the remainder of the bristle. The taper can comprise any suitable angle. Furthermore, brush segment 10 can include a fillet radius at the transition between root 20 of bristle 18 and outer edge 14 of base 12.

Bristles 18 comprise an aspect ratio defined as the length of bristle 18 measured from outer root 20 to tip 22, divided by the width of the bristle. In the case of a tapered bristle, the width is defined as the average width along the length for purposes of determining the aspect ratio. In the case of non-circular cross section, the width is taken as the longest width in a given plane, such as the corner-to-corner diagonal of a square cross section. With respect to the embodiments illustrated in Figures 1-13, the aspect ratio of bristles 18 is preferably at least 2, more preferably from about 5 to 100, and still more preferably from about 50 to 75. The size of bristles 18 can be selected for the particular application of brush segment 10 and brush 100. The length of bristles 18 is preferably from about 0.2 to 50 cm, more preferably from about 1 to 25 cm, and still more preferably from about 5 to 15 cm. The width of the bristles 18 is preferably from about 0.25 to 10 mm, more preferably from about 0.5 to 5.0 mm, still more preferably about 0.75 to 3.0 mm, and most preferably from about 1.0 to 2.0 mm. In one preferred embodiment, all of the bristles 18 have the same dimensions. Alternatively, bristles 18 on a brush assembly 100 comprising a plurality of brush segments 10 may have different dimensions such as different lengths, widths or cross sectional areas. For example, Figure 10 illustrates brush segment 10 having two groups of short bristles 18a and two groups of long bristles 18b. With respect to the embodiment illustrated in Figure 7, it is possible to arrange ring sector segments 10b. each having bristles of different length. With respect to the brush assemblies 100 illustrated in Figures 3 and 4, it is possible to employ adjacent brush segments 10 having different bristles.

The density and arrangement of bristles 18 can be chosen for the particular application of brush segment 10 and brush assembly 100. Bristles 18 preferably are arranged uniformly around the outer edge 14 of base 12. Alternatively, bristles 18 can be arranged in groups with spaces between the groups, and can be oriented in the plane of base 12 other than radially outward, that is, at a non-zero angle relative to the radius of base 12. Accordingly, brush segment 10 may have a portion of outer edge 14 which does not include any bristles 18. The bristles may be present over only a portion of outer edge 14 of base 12, or substantially the entire outer edge 14. Bristles 18 may or may not abut adjacent bristles as desired.

The material, length, and configuration of the bristles are preferably chosen such that bristles 18 are sufficiently flexible to aid in refining uneven or irregular workpieces. The bristles 18 are preferably capable of bending at least 25°, more preferably at least 45°, still more preferably at least 90°, and most preferably about 180°, without damage or substantial permanent deformation to the bristles.

It is possible to reinforce the bristles 18 with any suitable structure. For example, it is possible to place a reinforcing fiber or wire in the bristle mold cavities, and inject the moldable polymer 28 around the reinforcing wire. This will result in a bristle 18 having a reinforcing wire or fiber embedded within it.

### Attachment Means

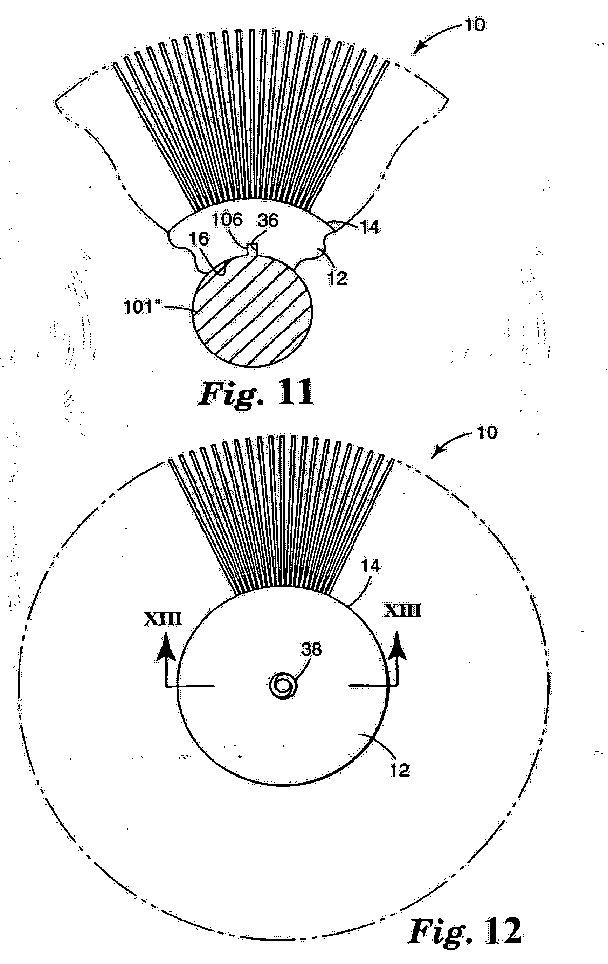

Brush segment 10 preferably includes an attachment means for joining several brush segments together to form a brush assembly, or for attaching one or more brush segments 10 to a support means such as a hub or shaft. As illustrated in Figures 1, 3 and 4, base 12 has inner edge 16 configured to engage with a shaft 101. Base 12 also includes mounting holes 19 for accepting locking rods 102. An alternate attachment means is illustrated in Figures 6 and 7, in which base 12b includes mounting root 30 comprising a neck 32 and base 34 configured to engage with a complementary configured slot 104 in shaft 101'. The arrangement illustrated in Figures 6 and 7 is well suited for brush segments which comprise ring sectors 12b. The mounting root 30 can support the ring sector in the radial direction during operation. Mounting root 30 can also be used with 360° brush segments 10, 10a. A further embodiment of an attachment means is illustrated in Figure 11, in which base 12 includes a channel or keyway 36 configured to engage a suitably configured key 106 in shaft 101".

In one preferred embodiment of the brush segment illustrated in Figures 1 and 2, the base 12 has an outer diameter at edge 14 of approximately 10 cm (4 inches), an inner diameter at edge 16 of approximately 5 cm (2 inches), and a thickness of approximately 2.0 mm (0.08 inches), with 144 bristles 18 extending radially outward from edge 14 in the plane of the base 12. Each bristle 18 is approximately 7.5 cm (3 inches) long and tapers from approximately 2.0 mm (0.08 inches) thick at the root to approximately 1.5 mm (0.06 inches) thick at the tip, with a cross section generally as illustrated in Figure 8c.

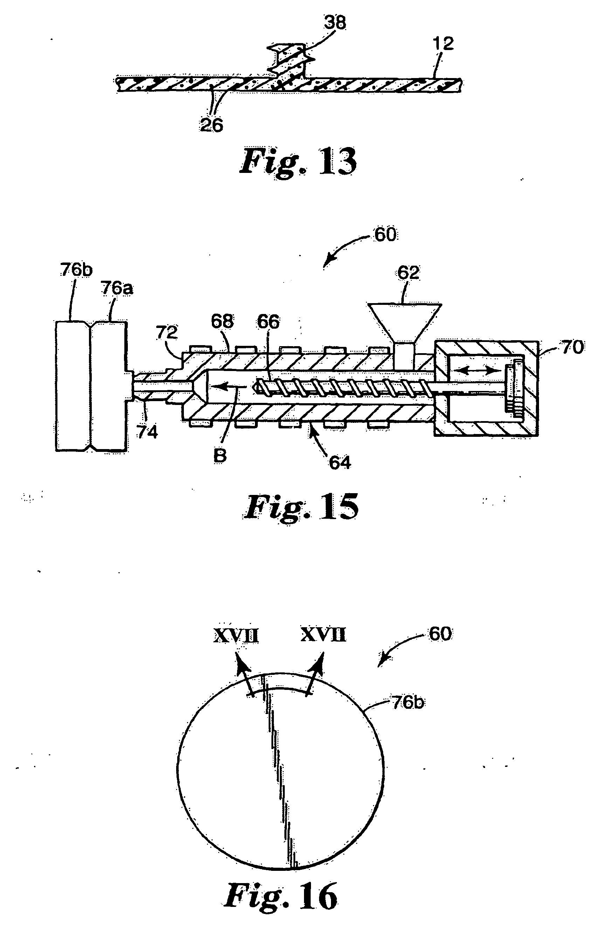

Still another alternate embodiment of the attachment means is illustrated in Figures 12 and 13. In this embodiment, base 12 is continuous, and does not include an opening defined by inner edge 16. The attachment means 38 is provided at the center of base 12. This type of attachment means is suitable for use with 360° circular brush segments. Suitable attachment means 38 are well known in the art and are described in U.S. Patent Nos. 3,562,968; 3,667,170; and 3,270,467. One preferred attachment means is the integrally-molded threaded stud adapted for screw-type engagement with a rotary tool as taught by U.S. Patent No. 3,562,968 It is preferred that the attachment means 38 is molded integrally with the base 12 and is centered relative to the base 12 for proper rotation of brush segment 10. The attachment means 38 may be made from the same material as the rest of the brush segment 10, and may contain abrasive panicles 26. Alternatively, the attachment means 38 may be made from a separate injection of moldable polymer 28 without abrasive particles 26.

In one preferred embodiment of the brush segment illustrated in Figures 21 and 23, the base 12 has an outer diameter at edge 14 of approximately 10 cm (4 inches) and a thickness of approximately 2.0 mm (0.08 inches), with 144 bristles 18 extending radially outward from edge 14 in the plane of the base 12. Each bristle 18 is approximately 7.5 cm (3 inches) long and tapers from approximately 2.0 mm (0.08 inches) thick at the root to approximately 1.5 mm (0.06 inches) thick at the tip, with a cross section generally as illustrated in Figure 8c. The brush segment includes an integrally-molded threaded stud adapted for screw-type engagement with a rotary tool as taught by U.S. Patent No. 3.562,968.

In another preferred embodiment of the brush segment illustrated in Figures 12 and 13, the base 12 has an outer diameter at edge 14 of approximately 2.5 cm (1 inch) and a thickness of approximately 2.5 mm (0. 1 inches), with 30 bristles 18 extending radially outward from edge 14 in the plane of the base 12. Each bristle 18 is approximately 2.25 cm (0.88 inches) long and tapers from approximately 3.0 mm (0.12 inches) thick at the root to approximately 2.0 mm (0.08 inches) thick at the tip, with a cross section generally as illustrated in Figure 8c. The brush segment includes an integrally-molded threaded stud adapted for screw-type engagement with a rotary tool as taught by U.S. Patent No. 3,562,968.

### Reinforcing Means

The base 12 may further comprise reinforcing means which can comprise a fiber reinforcing substrate. Reinforcing means can comprise, for example, fabric, non-woven sheeting, mat, mesh, scrim, and the like, or can comprise individual fibers compounded into the moldable polymer and dispersed throughout the brush segment. The reinforcing means may optionally contain a treatment to modify its physical properties. The purpose of the reinforcing means is to increase the flexural strength and tensile strength of the brush segment 10. Examples of reinforcing fibers suitable for use in the present invention include glass fibers, metal fibers, carbon fibers, wire mesh, mineral fibers, fibers formed of heat resistant organic materials, or fibers made from ceramic materials. Other organic fibers include polyvinyl alcohol fibers, nylon fibers, polyester fibers and phenolic fibers. If glass fibers are used, the moldable polymer mixture may preferably contain a coupling agent, such as a silane coupling agent, to improve the adhesion to the thermoplastic material. The length of the fiber preferably ranges from about 0.5 mm to about 50 mm, preferably about 1 mm to about 25 mm, most preferably about 1.5 mm to about 10 mm. The fiber denier is preferably between about 25 to 300, and more preferably between 50 to 200.

### Thermoplastic Elastomers

The moldable polymer material used in the brushes and brush segments described herein comprises a thermoplastic elastomer, providing a product that is particularly suitable for high speed, high stress applications. Thermoplastic elastomers (or "TPE"s) are defined and reviewed in Thermoplastic Elastomers, A Comprehensive Review, edited by N.R. Legge, G. Holden and H.E. Schroeder, Hanser Publishers, New York, 1987 (referred to herein as "Legge et al."). Thermoplastic elastomers (as used herein) are generally the reaction product of a low equivalent weight polyfunctional monomer and a high equivalent weight polyfunctional monomer, wherein the low equivalent weight polyfunctional monomer has a functionality of at most about 2 and equivalent weight of at most about 300 and is capable on polymerization of forming a hard segment (and, in conjunction with other hard segments, crystalline hard regions or domains) and the high equivalent weight polyfunctional monomer has a functionality of at least about 2 and an equivalent weight of at least about 350 and is capable on polymerization of producing soft, flexible chains connecting the hard regions or domains.

"Thermoplastic elastomers" differ from "thermoplastics" and "elastomers" (a generic term for substances emulating natural rubber in that they stretch under tension, have a high tensile, strength, retract rapidly, and substantially recover their original dimensions) in that thermoplastic elastomers, upon heating above the melting temperature of the hard regions, form a homogeneous melt which can be processed by thermoplastic techniques (unlike elastomers), such as injection molding, extrusion, blow molding, and the like. Subsequent cooling leads again to segregation of hard and soft regions resulting in a material having elastomeric properties, however, which does not occur with thermoplastics Thermoplastic elastomers combine the processability (when molten) of thermoplastic material with the functional performance and properties of conventional thermosetting rubbers (when in their non-molten state), and which are described in the art as ionomeric, segmented, or segmented ionomeric thermoplastic elastomers. The segmented versions comprise "hard segments" which associate to form crystalline hard domains connected together by "soft", long, flexible polymeric chains. The hard domain has a melting or disassociation temperature above the melting temperature of the soft polymeric chains.

Commercially available thermoplastic elastomers include segmented polyester thermoplastic elastomers, segmented polyurethane thermoplastic elastomers, segmented polyamide thermoplastic elastomers, blends of thermoplastic elastomers and thermoplastic polymers, and ionomeric thermoplastic elastomers.

"Segmented thermoplastic elastomer", as used herein, refers to the sub-class of thermoplastic elastomers which are based on polymers which are the reaction product of a high equivalent weight polyfunctional monomer and a low equivalent weight polyfunctional monomer Segmented thermoplastic elastomers are preferably the condensation reaction product of a high equivalent weight polyfunctional monomer having an average functionality of at least 2 and an equivalent weight of at least about 350, and a low equivalent weight polyfunctional monomer having an average functionality of at least about 2 and an equivalent weight of less than about 300. The high equivalent weight polyfunctional monomer is capable on polymerization of forming a soft segment, and the low equivalent weight polyfunctional monomer is capable on polymerization of forming a hard segment. Segmented thermoplastic elastomers useful in the present invention include polyester TPEs, polyurethane TPEs. and polyamide TPEs, and silicone elastotner/polyimide block copolymeric TPEs, with the low and high equivalent weight polyfunctional monomers selected appropriately to produce the respective TPE.

The segmented TPEs preferably include "chain extenders", low molecular weight (typically having an equivalent weight less than 300) compounds having from about 2 to 8 active hydrogen functionality, and which are known in the TPE art. Particularly preferred examples include ethylene diamine and 1,4-butanediol.

"Ionomeric thermoplastic elastomers" refers to a sub-class of thermoplastic elastomers based on ionic polymers (ionomers) Ionomeric thermoplastic elastomers are composed of two or more flexible polymeric chains bound together at a plurality of positions by ionic associations or clusters. The ionomers are typically prepared by copolymerization of a functionalized monomer with an olefinic unsaturated monomer, or direct functionalization of a preformed polymer. Carboxyl-functionalized ionomers are obtained by direct copolymerization of acrylic or methacrylic acid with ethylene, styrene and similar comonomers by free-radical copolymerization. The resulting copolymer is generally available as the free acid, which can be neutralized to the degree desired with metal hydroxides, metal acetates, and similar salts. A review of ionomer history and patents concerning same is provided in Legge et al., pp. 231-243.

"Thermoplastic polymer", or "TP" as used herein, has a more limiting definition than the general definition, which is "a material which softens and flows upon application of pressure and heat." It will of course be realized that TPEs meet the general definition af TP. since TPEs will also flow upon application of pressure and heat. It is thus necessary to be more specific in the definition of "thermoplastic" for the purposes of this invention. "Thermoplastic", as used herein, means a material which flows upon application of pressure and heat, but which does not possess the elastic properties of an elastomer when below its melting temperature.

Blends of TPE and TP materials are also within the invention, allowing even greater flexibility in tailoring mechanical properties of the abrasive filaments of the invention.

Commercially available and preferred segmented polyesters include those known under the trade designations "Hytrel^{™} 4056", "Hytrel^{™} 5526", "Hytrel^{™} 5556", "Hytrel^{™} 6356", "Hytrel^{™} 7246", and "Hytrel^{™} 8238" available from E.I. Du Pont de Nemours and Company, Inc., Wilmington, Delaware, with the most preferred including Hytrel^{™} 5526, Hytrel^{™} 5556, and Hytrel^{™} 6356. A similar family of thermoplastic polyesters is available under the tradename "Ritefiex" (Hoechst Celanese Corporation). Still further useful polyester TPEs are those known under the trade designations "Ecdel", from Eastman Chemical Products, Inc., Kingsport. Tennessee. "Lomad", from General Electric Company, Pittsfield, Massachusetts; "Arnitel" from DSM Engineered Plastics; and "Bexloy" from Du Pont. Further useful polyester TPEs include those available as "Lubricomp" from LNP Engineering Plastics, Exton, Pennsylvania, and is commercially available incorporating lubricant, glass fiber reinforcement, and carbon fiber reinforcement.

Commercially available and preferred segmented polyamides include those known under the trade designation "Pebax" and "Rilsan", both available from Atochem Inc., Glen Rock, New Jersey.

Commercially available and preferred segmented polyurethanes include those known under the trade designation "Estane", available from B.F. Goodrich, Cleveland, Ohio. Other segmented preferred segmented polyurethanes include those known under the trade designations "Peltethane", and "Isoplast" from The Dow Corning Company, Midland, Michigan, and those known under the trade designation "Morthane", from Morton Chemical Division, Morton Thiokol, Inc.; and those known under the trade designation "Elastollan", from BASF Corporation, Wyandotte, Michigan.

Thermoplastic elastomers are further described in U.S. Patent No. 5,443,906 (Pihl et al.).

### Abrasive Particles

The abrasive particles 26 useful in the brushes and brush segments described herein typically have a particle size ranging from about 0.1 to 1500 micrometers, usually between about 1 to 1300 micrometers, and preferably between 50 and 500 micrometers, The abrasive particles may be organic or inorganic. Examples of abrasive particles include fused aluminum oxide, heat treated fused aluminum oxide, ceramic aluminum oxide, heated treated aluminum oxide, silicon carbide, titanium diboride, alumina zirconia, diamond, boron carbide, ceria, cubic boron nitride, garnet, and combinations thereof Preferred fused aluminum oxide include those available commercially pretreated by Exolon ESK Company, Tonawanda, New York, or Washington Mills Electro Minerals Corp., North Grafton, Massachusetts. Preferred ceramic aluminum oxide abrasive particles are well known in the art and include those described in U.S. Patents Nos. 4,314,827; 4,623,364; 4,744,802; 4,770,671; 4,881,951; 4,964,883; 5,011,508; and 5,164,348. Preferred alpha alumina-based ceramic abrasive particle comprising alpha alumina and rare earth oxide include those commercially available under the designation Cubitron^{™} 321 from Minnesota Mining and Manufacturing Company, Saint Paul, Minnesota. Other examples of abrasive particles include solid glass spheres, hollow glass spheres, calcium carbonate, polymeric bubbles, silicates, aluminum trihydrate, and mullite. The abrasive particle can be any particulate material (inorganic or organic) that when combined with the binder results in an abrasive brush 10 that can refine a workpiece surface. The selection of the abrasive material will depend in part on the intended application. For example, for stripping paints from a vehicle, it is sometimes preferred to use a relatively soft abrasive particle so as not to damage the surface underneath the paint. Alternatively, for removing burs from metal workpieces, it is preferred to use a harder abrasive particle such as alumina. The abrasive brush of the present invention may include two or more types and/or sizes of abrasive particles.

As used herein, the term abrasive particles also encompasses single abrasive particles which are bonded together to form an abrasive agglomerate. Abrasive agglomerates are well known in the art and are further described in U.S. Patent Nos. 4,311,489, 4,652,275; and 4,799,939. The abrasive particles of this invention may also contain a surface coating. Surface coatings are known to improve the adhesion between the abrasive particle and the binder in the abrasive article. Such surface coatings are well known in the art and are described in U.S. Patent Nos. 5,011,508; 1,910,444; 3,041,156; 5,009,675; 4,997,461; 5.213,591; and 5,042,991. In some instances, the addition of the coating improves the abrading and/or processing characteristics of the abrasive particle.

The plastic abrasive particles useful in the brushes and brush segments described herein are organic based materials They are preferably formed from either a thermoplastic polymer and/or a thermosetting polymer. Plastic abrasive particles useful in the present invention may be individual particles or agglomerates of individual particles. The agglomerates may comprise a plurality of the plastic abrasive particles bonded together by a binder to form a shaped mass.

The plastic abrasive particles are preferably present in the thermoplastic matrix at a weight percent (per total weight of thermoplastic matrix and plastic abrasive particles) ranging from about 0.1 to about 80 weight percent, more preferably from about 3 to about 60 weight percent The weight percentage depends in part on the particular abrading or brush applications.

The size of the plastic abrasive particles incorporated into the thermoplastic matrix depends on the intended use of the brush or brush segment. For applications requiring cutting or rough finishing, larger plastic abrasive particles are preferred, while plastic abrasive particles having smaller size are preferred for finishing applications. Preferably, the average diameter of the particles is no more than about 1/2 the diameter of the brush bristle, more preferably no more than about 1/3 of the diameter of the brush bristle.

The plastic abrasive particles will have an average particle size from about 0.01 to about 500 micrometers, typically between about 0. 1 to about 250 micrometers, preferably between about 1 to about 150 micrometers, more preferably between about 5 to about 100 micrometers and most preferably between about 5 to about 75 micrometers. The average particle size is typically measured by the longest dimension.

The plastic abrasive particles can have any precise shape or can be irregularly or randomly shaped. Examples of such three dimensional shapes includes: pyramids, cylinders, cones, spheres, blocks, cubes, polygons, and the like. Alternatively, the plastic abrasive particles can be relatively flat and have a cross sectional shape such as a diamond, cross, circle, triangle, rectangle, square, oval, octagon, pentagon, hexagon, polygon and the like.

The surface of the plastic abrasive particles (or a portion of their surface, or the entire surface of a portion of the particles may be treated with coupling agents to enhance adhesion to and/or dispersibility in the molten thermoplastic matrix. The plastic abrasive particles are not required to be uniformly dispersed in the hardened composition, but a uniform dispersion may provide more consistent abrasion characteristics.

The plastic abrasive particles can be formed from a thermoplastic material such as polycarbonate, polyetherimide, polyester, polyvinyl chloride, methacrylate, methylmethacrylate, polyethylene, polysulfone, polystyrene, acrylonitrile-butadiene-styrene block copolymer, polypropytene, acetal polymers, polyurethanes, polyamide, and combinations thereof In general, preferred thermoplastic polymers of the invention are those having a high melting temperature, e.g. greater than 200°C, more preferably 300°C; or good heat resistance properties. The plastic abrasive particles should have a higher melting or softening point than the thermoplastic elastomer that the plastic particles are not substantially affected by the manufacturing process. The plastic particle should be capable of maintaining a generally particulate state during brush processing, and therefore should be selected so as not to substantially melt or soften during the manufacturing process. In one preferred embodiment, the plastic parties are selected to provide greater abrasive properties than the thermoplastic elastomer. In this manner, the plastic abrasive particles will perform the desired surface refinement, such as removing foreign material form the workpiece or providing a fine surface finish, while the thermoplastic elastomer wears away during operation to continuously present fresh plastic abrasive particles to the workpiece surface.

There are several ways to form a thermoplastic abrasive particle One such method is to extrude the thermoplastic polymer into elongate segments and then cut these segments into the desired length. Alternatively, the thermoplastic polymer can be molded into the desired shape and particle size. This molding process can be compression molding or injection molding.

The plastic abrasive particles can be formed from a thermosetting polymer. Thermosetting polymers can be formed from: phenolic resins, aminoplast resins, urethane resins, epoxy resins, acrylate resins, acrylated isocyanurate resins, ureaformaldehyde resins, isocyanurate resins, acrylated urethane resins, melamine formaldehyde resins, acrylated epoxy resins and mixtures thereof Phenolic based abrasive particles are one preferred abrasive particles. There are two types of phenolic resins, resole and novolac. Resole phenolic resins have a molar ratio of formaldehyde to phenol, of greater than or equal to one to one, typically between 1.5:1.0 to 3.0:1.0. Novolac resins have a molar ratio of formaldehyde to phenol, of less than to one to one. Examples of commercially available phenolic resins include those known by the tradenames "Durez" and "Varcum" from Occidental Chemicals Co., Burlington, NJ; "Resinox" from Monsanto; "Aerofene" and "Arotap" from Ashland Chemical Co., Columbus, OH. These phenolic resins are cured to thermosetting polymers. The resulting thermosetting polymers are then crushed to the desired particle size and particle size distribution. In alternative method, the thermosetting plastic abrasive particles can be made in accordance with the teachings of the U.S. Patent No. 5,500,273, "Precisely Shaped Particles and Method of Making Same" (Holmes et al.). The plastic abrasive particle may be a mixture of a thermoplastic polymer and a thermosetting polymer.

A particularly preferred organic abrasive particle is a metal and mold cleaning plastic blast media available commercially as "MC" blast media from Maxi Blast Inc., South Bend, IN, available with an antistatic coating, but preferably untreated. The "MC" media is a 99% melamine formaldehyde cellulosate, an amino thermoset plastic.

The average knoop hardness of the plastic abrasive particle is generally less than about 80 KNH, and preferably less than about 65 KNH.

It is also within the scope ofthis invention to incorporate inorganic based abrasive particles along with the plastic abrasive particles. These inorganic abrasive particles typically have a particle size ranging from about 0.01 to 500 micrometers, usually between about 1 to 150 micrometers. In certain cases, it is usually preferred that the inorganic abrasive particles are either the same size or smaller than the plastic abrasive particles. It is preferred that the abrasive particles have a Mohs hardness of at least about 7, more preferably above 9. For example, the abrasive filament may comprise between 10 to 90% by weight thermoplastic matrix, between 10 to 90% by weight plastic abrasive particles and between 0 to 49% by weight inorganic abrasive particles.

Abrasive particles 26 are typically from about 0.1 to 75 percent by weight of the particle and polymer mixture, preferably from about 3 to 60 percent, more preferably about 5 to 50 percent, and still more preferably about 20 to 40 percent, although more or less may be used as desired. For some surface refinement applications, it is desirable that brush segment 10 comprises a moldable polymeric material 28 without abrasive particles 26.

### Additives

The moldable polymeric material 28 may further include optional additives, such as, for example, fillers (including grinding aids), fibers, antistatic agents, antioxidants, processing aids. UV stabilizers, flame retardants, lubricants, wetting agents, surfactants, pigments, dyes, coupling agents, plasticizers and suspending agents. The amounts of these materials are selected to provide the properties desired. One preferred method of incorporating certain additives into the moldable polymeric material is to encapsulate the additives into a shell that is able to withstand extrusion or molding temperatures and pressures.

### Lubricants

For some refining applications, it is preferred that the molded polymer 28 include a lubricant. The presence of a lubricant in the moldable polymer 28 reduces the friction of the bristle contacting the workpiece surface. This reduces the heat generated when refining the workpiece. Excessive heat may cause the abrasive brush to leave residue on the workpiece or to otherwise harm the workpiece. Suitable lubricants include lithium stearate, zinc stearate, calcium stearate, aluminum stearate, ethylene bis stearamide, graphite, molybdenum disulfide, polytetraflouroethylene (PTFE), and silicone compounds, for example useful with thermoplastics and thermoplastic elastomers.

An example of a preferred silicone material is a high molecular weight polysiloxane of formula (A): 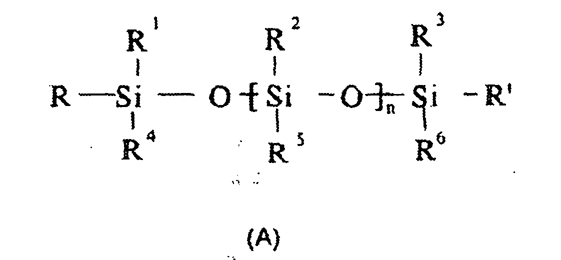 wherein R, R', R¹, R², R³, R⁴, R⁵, and R⁶ may be the same or different and can be an alkyl, vinyl, chloroalkyl, aminoalkyl, epoxy, fluororalkyl, chloro, fluoro, or hydroxy, and n is 500 or greater, preferably 1,000 or greater, more preferably 1,000 to 20,000, and most preferably 1,000 to 15,000.

Another preferred polysiloxane is a polydimethylsitoxane of formula (B): 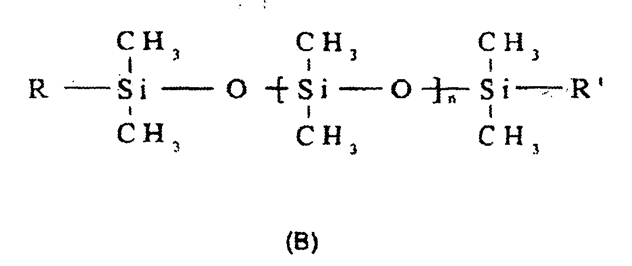 wherein R and R' may be the same or different and can be an alkyl, vinyl, chloroalkyl, aminoalkyl, epoxy, fluororalkyl, chloro, fluoro, or hydroxy, and n is 500 or greater, preferably 1,000 or greater, more preferably 1,000 to 20,000, and most preferably 1,000 to 15,000.

Polysiloxanes are available in many different forms, e.g., as the compound itself or as a concentrate. Example of the polymers into which the polysiloxane can be compounded include polypropylene, polyethylene, polystyrene, polyamides, polyacetal, acrylonitrile-butadiene-styrene (ABS), and polyester elastomer, all of which are commercially available. Silicone modified Hytrel^{™} is available commercially as BY27-010 (or MB50-010), and silicone modified Nylon 6,6 is available commercially as BY27-005 (or MB50-005), both from Dow Corning Company, Midland, Michigan. Typically, commercially available concentrates may contain a polysiloxane at a weight percent ranging from 40 to 50; however, any weight percent is acceptable for purposes of the invention as long as the desired weight percent in the final product can be achieved. Lubricants preferably can be present in the moldable polymer 26 in amounts of up to about 20 percent by weight (exclusive of abrasive particle content), and preferably in an amount from about I to 10 percent, although more or less may be used as desired.

### Coupling Agent

The moldable polymeric material 28 may include a coupling agent to improve the bond between the binder and the abrasive particles as is known in the art Examples of such coupling agents suitable for this invention include organo silanes, zircoaluminates and titanates. Preferred silane coupling agents, typically amine functional such as gamma-ammopropyltriethoxysilane, are commercially available as A-1100, or -1102 from Union Carbide Corporation. New York. New York The abrasive particles 26 may be pretreated with a coupling agent prior to being with the moldable polymer. Alternatively, the coupling agent may be added directly to the moldable polymer 28.

### Fillers

The moldable polymeric material 28 may include a filler as is known in the art. Examples of useful fillers for this invention include: metal carbonates (such as calcium carbonate (chalk, calcite, marl, travertine, marble and limestone), calcium magnesium carbonate, sodium carbonate, magnesium carbonate), silica (such as quartz, glass beads, glass bubbles and glass fibers) silicates (such as talc, clays, (montmorillonite) feldspar, mica, calcium silicate, calcium metasilicate, sodium aluminosilicate, sodium silicate) metal sulfates (such as calcium sulfate, barium sulfate, sodium sulfate, aluminum sodium sulfate, aluminum sulfate), gypsum, vermiculite, wood flour, aluminum trihydrate, carbon black, metal oxides (such as calcium oxide (lime), aluminum oxide, titanium dioxide) and metal sulfites (such as calcium sulfite). In some instances, the filler may serve as an abrasive particle.

### Grinding Aids

The polymeric material may include a grinding aid. A grinding aid is defined herein as particulate material that the addition of which has a significant effect on the chemical and physical processes of abrading which results in improved performance. In particular, it is believed in the art that the grinding aid will either 1) decrease the friction between the abrasive particles and the workpiece being abraded, 2) prevent the abrasive particle from "capping", i.e. prevent metal particles from becoming welded to the tops of the abrasive particles, 3) decrease the interface temperature between the abrasive particles the workpiece or 4) decreases the grinding forces. Examples of chemical groups of grinding aids include waxes, organic halide compounds, halide salts and metals and their alloys. The organic halide compounds will typically break down during abrading and release a halogen acid or a gaseous halide compound. Examples of such materials include chlorinated waxes like tetrachloronaphthalene, pentachloronaphthalene; and polyvinyl chloride. Examples of halide salts include sodium chloride, potassium cryolite, sodium cryolite, ammonium cryolite, potassium tetrafluoroborate, sodium tetrafluoroborate, silicon fluorides, potassium chloride, magnesium chloride. Examples of metals include, tin, lead, bismuth, cobalt, antimony, cadmium, iron, and titanium. Other miscellaneous grinding aids include sulfur, organic sulfur compounds, graphite and metallic sulfides.

### Injection Molding

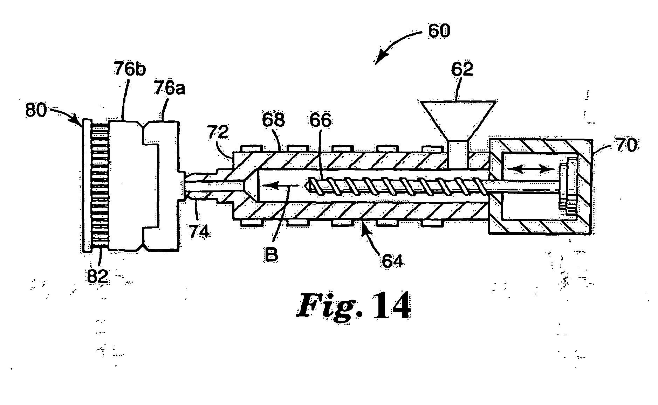

The abrasive brush or brush segment 10 of the present invention is preferably injection molded. Injection molding techniques are known in the art. Injection molding apparatus 60 for making the abrasive brush 10 according to the method of the present invention is illustrated in Figure 14. After preferably being dried by heating, a mixture of pellets comprising moldable polymer 28 and, optionally, abrasive particles 26 is placed in a hopper 62. The hopper feeds the mixture into a first or rear side 70 of a screw injector 64 generally comprising a screw 66 within a barrel 68. The opposite side, or front side 72 of the screw injector 64 comprises a nozzle 74 for passing the softened mixture into a mold 76a, 76b. The barrel 68 of the injector 64 is heated to melt the mixture, and the rotating screw 66 propels the mixture in the direction of the nozzle 74. The screw 66 is then moved linearly frontward in direction B to impart the "shot" of the softened mixture into the mold 76a, 76b at the desired pressure. A gap is generally maintained between the forward end of the screw and the nozzle to provide a "cushion" area of softened material which is not injected into the mold.

The mold will contain cavities which are the inverse of the desired abrasive brush configuration. Thus, for molded brush 10, the mold design must take into account the abrasive brush configuration including the size and configuration of the base 12, the bristles 18, and the optional attachment means 30. For molded brush or segment 10 as illustrated in Figures 1 and 2, the mold 76a, 76b illustrated in Figure 16 will contain cavities which are the inverse of the desired brush segment configuration. Thus the mold design must take into account the brush segment configuration including the size and configuration of base 12, bristles 18, and optional attachment means such as holes 19, root 30, keyway 36. or threaded stud 38. As seen in Figure 17 mold portion 76a includes cavities 78 for forming bristles 18. The mold embodiment illustrated in Figure 17 is configured to mold the bristle embodiment illustrated in Figure 8c. Alternatively, mold portions 76c and 76d illustrated in Figure 18 can be used to form a double row of staggered bristles 18. Such a bristle arrangement is illustrated in Figure 19.

The above mentioned pellets can be preferably prepared as follows. The moldable polymer 28 can be heated above its melting point and the abrasive particles 26 can then be mixed in. The resulting mixture is then formed into continuous strands and the strands are cooled to solidify the moldable polymer for pelletizing on suitable equipment as is known in the art. Likewise, lubricants and/or other additives to the polymeric material 28 can be included in the formation of the pellets. The pellets comprising the moldable polymer 28, abrasive particles 26, and any desired lubricant or other additive are then placed into the hopper 62 to be fed into the screw extruder 64 as described above. Alternatively, it is possible to mix the abrasive particles 26 with pellet form of the moldable polymer 28 and load this in the hopper. Likewise, lubricants and/or other additives to the polymeric material 28 can be mixed in prior to being loaded into the hopper.

The conditions under which the abrasive brush is injection molded are determined by the injection molder employed, the configuration of the brush 10, and the composition of the moldable polymer 28 and abrasive particles 26. In one preferred method, the moldable polymer 28 is first heated to between 80 to 120°C, preferably 90 to 110°C for drying, and is placed in the hopper 62 to be gravity fed into the screw feed zone. The barrel temperature of the screw injector is preferably from about 200 to 250°C. more preferably from about 220 to 245°C. The temperature of the mold is preferably from about 50 to 150°C, more preferably from about 100 to 144°C. The cycle time (the time from introducing the mixture into the screw extruder to opening the mold to remove the molded abrasive brush) will preferably range between 0.5 to 180 seconds, more preferably from about 5 to 60 seconds. The injection pressure will preferably range from about 690 to 6,900 kPa (100 to 1000 psi), more preferably from about 2070 to 4830 kPa (300 to 700 psi).

The injection mold cycle will depend upon the material composition and the abrasive brush configuration. In one preferred embodiment, the moldable polymer and abrasive particles are generally homogenous throughout the abrasive brush 10. In such an embodiment, there will be a single insertion or shot of mixture of the polymeric material 28 and abrasive particle 26 to mold the brush 10, including the base 12, bristles 18, and attachment means 30 if present. Alternatively, the bristles 18 may contain abrasive particles 26, but the base 12 docs not. In such an embodiment, there will be two insertions or shots of material. The first insertion will contain a mixture of moldable polymer 28 and abrasive particles 26 to primarily fill the bristle portion of the mold. The second insertion will contain moldable polymer (which may be the same or different from the moldable polymer of the first insertion) without abrasive particles to primarily fill the base and attachment means portions of the mold. Likewise, the base 12 and bristles 18 may contain abrasive particles, but the attachment means 30 may not. In this construction there will be two insertions or shot of material. The first insertion will contain a mixture of moldable polymer 28 and abrasive particles 26 to fill the bristle and base portions of the mold. The second insertion will contain only a moldable polymer (which may be the same or different from the moldable polymer of the first insertion) to primarily fill the attachment means portion of the mold. It is also possible to use more than one shot to vary the color of different portions of the brush if desired. It is also possible to employ three or more shots, for example one each for the bristles, base, and attachment means After injection molding, the mold is cooled to solidify the moldable polymer The mold halves are then separated to allow removal of molded abrasive brush 10.

### Method of Refining a Surface

As discussed above, the molded abrasive brush 10 according to the present invention is used to refine a surface by: removing a portion of a workpiece surface; imparting a surface finish to a workpiece; cleaning a workpiece surface, including removing paint or other coatings, gasket material, corrosion, or other foreign material; or some combination of the foregoing.

As discussed above, molded brush segment 10 and brush assembly 100 as shown in Figures 1 to 13 are used to refine a surface by removing a portion of a workpiece surface; imparting a surface finish to a workpiece; cleaning a workpiece surface, including removing paint or other coatings, gasket material, corrosion, or other foreign material; or some combination of the foregoing. In one preferred embodiment illustrated in Figure 4, brush assembly 100 comprises a plurality of brush segments 10 fastened by the attachment means to a shaft 101 and a suitable drive means. Alternatively, the brush segment of Figure 12 can be mounted to a suitable rotary drive means. Surface refining can be dry or wet, as with water, lubricant, rust inhibitor, or other suitable liquids as is well known in the art. The brush assembly 100 or segment 10 can be rotated at any suitable speed, preferably in the range of about 100 to 15,000 RPM, although higher or lower speeds can be used as desired. Surface refinement can be performed with any suitable force on the brush assembly or segment, typically from about 0.5 to 100 kg. It should be noted that the bristles 18 are sufficiently flexible and supple that, under many refining operations, contact of the bristle against the workpiece is along a substantial length of the side of the bristle, not merely a small portion of the bristle immediately adjacent the tip 18. By using organic abrasive particles described herein, the abrasive brush can be used to remove a foreign material, for example paint, dirt, debris, oil, oxide coating, rust, adhesive, gasket material and the like, from a workpiece surface without removing a significant amount of material from the workpiece itself.

## Claims

1. An integrally molded abrasive brush (10) comprising:
a base (12) having a first side, a second side, and an outer edge (14), wherein said base is generally planar; and
a plurality of bristles (18) extending from said outer edge of said base wherein said bristles have an aspect ratio of at least 2, and wherein said bristles are integrally molded with said base;
wherein said molded abrasive brush comprises a thermoplastic elastomer (28) and wherein said bristles include abrasive particles (26) interspersed in said thermoplastic elastomer.

2. **The molded abrasive brush (10) of claim 1, wherein said base (12) is flexible.**

3. The molded abrasive brush (10) of claim 1 or claim 2, wherein said brush includes abrasive particles interspersed throughout said abrasive brush.

4. The molded abrasive brush (10) of any of claims 1 to 3, wherein said bristles (18) have an aspect ratio of at least 5.

5. The molded abrasive brush (10) of any of claims 1 to 3, wherein said bristles (18) have an aspect ratio of at least 7.

6. The molded abrasive brush (10) of any of claims 1 to 3, wherein said bristles (18) have an aspect ratio of at least 10.

7. The molded abrasive brush (10) of any of claims 1 to 3, wherein said bristles (18) have an aspect ratio of at least 20.

8. The molded abrasive brush (10) of any of claims 1 to 7, wherein said bristles (18) each comprise a root (20) adjacent said base (12) and a tip (22) opposite said base, and wherein said bristles are tapered so as to be wider at said root than at said tip.

9. The molded abrasive brush (10) of any of claims 1-8, wherein said bristles (18) are coplanar with said base (12).

10. The molded abrasive brush (10) of any of claims 1-9, wherein said bristles (18) extend radially from said outer edge (14) of said base (12).

11. The molded abrasive brush (10) of any of claims 1-10, wherein said bristles (18) are evenly angularly spaced about said outer edge (14).

12. The molded abrasive brush (10) of any of claims 1-11, further comprising an attachment means provided on said base (12) for attaching said brush to a drive means.

13. The molded abrasive brush (10) of any of claims 1-12, wherein said base (12) further includes an inner edge (16) and wherein said inner edge (16) and said outer edge (14) comprise concentric circles bounding said base.

14. The molded abrasive brush (10) of any of claims 1-12, wherein said outer edge (14) is circular, and wherein said attachment means comprises a treaded stud (38) integrally molded with said base, and located at the center of said base.

15. The molded abrasive brush (10) of any of claims 1-14, wherein said thermoplastic elastomer (28) comprises a polyester based thermoplastic elastomer.

16. The molded abrasive brush (10) of any of claims 1-15, wherein said thermoplastic elastomer (28) further comprises a lubricant.

17. The molded abrasive brush (10) of any of claims 1-16, wherein said abrasive particles (26) comprise inorganic abrasive particles.

18. The molded abrasive brush (10) of any of claims 1-16, wherein said abrasive particles (26) comprise organic abrasive particles.

19. The molded abrasive brush (10) of any of claims 1-18, wherein said base (12) includes a reinforcing means (40) for reinforcing said base.

## Patentansprüche

1. Integral geformte Schleifbürste (10) umfassend folgendes:
eine Basis (12) mit einer ersten Seite, einer zweiten Seite und einem Außenrand (14), wobei die Basis allgemein planar ist; und
mehrere sich von dem Außenrand der Basis erstreckende Borsten (18) mit einem Längenverhältnis von mindestens 2, wobei die Borsten mit der Basis integral geformt sind;
wobei die geformte Schleifbürste ein thermoplastisches Elastomer (28) umfaßt und wobei die Borsten Schleifteilchen (26) enthalten, mit denen das thermoplastische Elastomer durchsetzt ist.

2. Geformte Schleifbürste (10) nach Anspruch 1, bei der die Basis (12) flexibel ist.

3. Geformte Schleifbürste (10) nach Anspruch 1 oder 2, bei der die Bürste Schleifteilchen umfaßt, die die ganze Schleifbürste durchsetzen.

4. Geformte Schleifbürste (10) nach einem der Ansprüche 1 - 3, bei der die Borsten (18) ein Längenverhältnis von mindestens 5 aufweisen.

5. Geformte Schleifbürste (10) nach einem der Ansprüche 1 - 3, bei der die Borsten (18) ein Längenverhältnis von mindestens 7 aufweisen.

6. Geformte Schleifbürste (10) nach einem der Ansprüche 1 - 3, bei der die Borsten (18) ein Längenverhältnis von mindestens 10 aufweisen.

7. Geformte Schleifbürste (10) nach einem der Ansprüche 1 - 3, bei der die Borsten (18) ein Längenverhältnis von mindestens 20 aufweisen.

8. Geformte Schleifbürste (10) nach einem der Ansprüche 1 - 7, bei der die Borsten (18) jeweils eine Wurzel (20) neben der Basis (12) und eine Spitze (22) gegenüber der Basis umfassen und bei der die Borsten konisch so zulaufen, daß sie an der Wurzel breiter sind als an der Spitze.

9. Geformte Schleifbürste (10) nach einem der Ansprüche 1 - 8, bei der die Borsten (18) mit der Basis (12) koplanar sind.

10. Geformte Schleifbürste (10) nach einem der Ansprüche 1 - 9, bei der die Borsten (18) sich radial vom Außenrand (14) der Basis (12) erstrecken.

11. Geformte Schleifbürste (10) nach einem der Ansprüche 1 - 10, bei der die Borsten (18) um den Außenrand (14) herum gleichmäßig winkelförmig verteilt sind.

12. Geformte Schleifbürste (10) nach einem der Ansprüche 1 - 11, weiterhin umfassend ein an der Basis (12) vorgesehenes Befestigungsmittel zur Befestigung der Bürste an einem Antriebsmittel.

13. Geformte Schleifbürste (10) nach einem der Ansprüche 1 - 12, bei der die Basis (12) weiterhin einen Innenrand (16) enthält und bei der der Innenrand (16) und der Außenrand (14) die Basis begrenzende konzentrische Kreise umfassen.

14. Geformte Schleifbürste (10) nach einem der Ansprüche 1 - 12, bei der der Außenrand (14) kreisförmig ist, und bei der das Befestigungsmittel einen integral mit der Basis geformten Gewindezapfen (38) umfaßt, der sich im Zentrum der Basis befindet.

15. Geformte Schleifbürste (10) nach einem der Ansprüche 1 - 14, bei der das thermoplastische Elastomer (28) ein thermoplastisches Elastomer auf Polyesterbasis umfaßt.

16. Geformte Schleifbürste (10) nach einem der Ansprüche 1 - 15, bei der das thermoplastische Elastomer (28) weiterhin ein Gleitmittel umfaßt.

17. Geformte Schleifbürste (10) nach einem der Ansprüche 1 - 17, bei der die Schleifteilchen (26) anorganische Schleifteilchen umfassen.

18. Geformte Schleifbürste (10) nach einem der Ansprüche 1 - 16, bei der die Schleifteilchen (26) organische Schleifteilchen umfassen.

19. Geformte Schleifbürste (10) nach einem der Ansprüche 1 - 18, bei der die Basis (12) zu ihrer Verstärkung ein Verstärkungsmittel (40) enthält.

## Revendications

1. Brosse abrasive intégralement moulée (10) comprenant:
une base (12) ayant une première face, une seconde face, et un bord extérieur (14), dans laquelle ladite base est généralement plane; et
une pluralité de poils (18) s'étendant à partir dudit bord extérieur de ladite base, dans laquelle lesdits poils ont un rapport d'élancement d'au moins 2, et dans laquelle lesdits poils sont intégralement moulés avec ladite base;
dans laquelle ladite brosse abrasive moulée comprend un élastomère thermoplastique (28) et dans laquelle lesdits poils comprennent des particules abrasives (26) dispersées dans ledit élastomère thermoplastique.

2. Brosse abrasive moulée (10) conformément à la revendication 1, dans laquelle ladite base (12) est flexible.

3. Brosse abrasive moulée (10) conformément à la revendication 1 ou à la revendication 2, dans laquelle ladite brosse comprend des particules abrasives dispersées d'un bout à l'autre de ladite brosse abrasive.

4. Brosse abrasive moulée (10) conformément à la l'une quelconque des revendications 1 à 3, dans laquelle lesdits poils (18) ont un rapport d'élancement d'au moins 5.

5. Brosse abrasive moulée (10) conformément à l'une quelconque des revendications 1 à 3, dans laquelle lesdits poils (18) ont un rapport d'élancement d'au moins 7.

6. Brosse abrasive moulée (10) conformément à l'une quelconque des revendications 1 à 3, dans laquelle lesdits poils (18) ont un rapport d'élancement d'au moins 10.

7. Brosse abrasive moulée (10) conformément à l'une quelconque des revendications 1 à 3, dans laquelle lesdits poils (18) ont un rapport d'élancement d'au moins 20.

8. Brosse abrasive moulée (10) conformément à l'une quelconque des revendications 1 à 7, dans laquelle lesdits poils (18) comprennent chacun une racine (20) à proximité de ladite base (12) et une pointe (22) à l'opposé de ladite base, et dans laquelle lesdits poils sont effilés de manière à être plus larges à ladite racine qu'à ladite pointe.

9. Brosse abrasive moulée (10) conformément à l'une quelconque des revendications 1 à 8, dans laquelle lesdits poils (18) sont co-planaires avec ladite base (12).

10. Brosse abrasive moulée (10) conformément à l'une quelconque des revendications 1 à 9, dans laquelle lesdits poils (18) s'étendent radialement à partir dudit bord extérieur (14) de ladite base (12).

11. Brosse abrasive moulée (10) conformément à l'une quelconque des revendications 1 à 10, dans laquelle lesdits poils (18) sont uniformément espacés de façon angulaire autour dudit bord extérieur (14).

12. Brosse abrasive moulée (10) conformément à l'une quelconque des revendications 1 à 11, comprenant en outre des moyens de fixation prévus sur ladite base (12) servant à attacher ladite brosse à des moyens d'entraînement.

13. Brosse abrasive moulée (10) conformément à l'une quelconque des revendications 1 à 12, dans laquelle ladite base (12) comprend en outre un bord intérieur (16) et dans laquelle ledit bord intérieur (16) et ledit bord extérieur (14) comprennent des cercles concentriques limitant ladite base.

14. Brosse abrasive moulée (10) conformément à l'une quelconque des revendications 1 à 12, dans laquelle ledit bord extérieur (14) est circulaire, et dans laquelle lesdits moyens de fixation comprennent un goujon fileté (38) intégralement moulé avec ladite base et se situant au centre de ladite base.

15. Brosse abrasive moulée (10) conformément à l'une quelconque des revendications 1 à 14, dans laquelle ledit élastomère thermoplastique (28) comprend un élastomère thermoplastique à base de polyester.

16. Brosse abrasive moulée (10) conformément à l'une quelconque des revendications 1 à 15, dans laquelle ledit élastomère thermoplastique (28) comprend en outre un lubrifiant.

17. Brosse abrasive moulée (10) conformément à l'une quelconque des revendications 1 à 16, dans laquelle lesdites particules abrasives (26) comprennent des particules abrasives inorganiques.

18. Brosse abrasive moulée (10) conformément à l'une quelconque des revendications 1 à 16, dans laquelle lesdites particules abrasives (26) comprennent des particules abrasives organiques.

19. Brosse abrasive moulée (10) conformément à l'une quelconque des revendications 1 à 18, dans laquelle ladite base (12) comprend des moyens de renforcement (40) servant à renforcer ladite base.
